(19) Europäisches Patentamt
European Patent Office
Office européen des brevets

(11) **EP 3 747 958 B1**

(12) **EUROPEAN PATENT SPECIFICATION**

(45) Date of publication and mention
of the grant of the patent:
**15.10.2025 Bulletin 2025/42**

(21) Application number: **20177779.4**

(22) Date of filing: **02.06.2020**

(51) International Patent Classification (IPC):
*C09D 5/00* (2006.01)  *C09D 5/33* (2006.01)
*C09D 7/48* (2018.01)  *C09D 7/62* (2018.01)
*C09D 133/06* (2006.01)  *G02B 1/18* (2015.01)
*C08K 3/22* (2006.01)  *C08K 3/40* (2006.01)
*C08K 7/16* (2006.01)  *C08K 7/20* (2006.01)
*C08K 9/06* (2006.01)

(52) Cooperative Patent Classification (CPC):
(C-Sets available)
**C08K 7/16; C08K 7/20; C09D 5/00; C09D 5/004;
C09D 7/48; C09D 7/62; C09D 133/04; G02B 1/18;**
C08K 9/06; C08K 9/10; C08K 2003/2241;
C08K 2201/003; G02B 7/021           (Cont.)

(54) **ARTICLE, OPTICAL APPARATUS, AND COATING MATERIAL**

**ARTIKEL, OPTISCHE VORRICHTUNG UND BESCHICHTUNGSMATERIAL**

**ARTICLE, APPAREIL OPTIQUE ET MATÉRIAU DE REVÊTEMENT**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **06.06.2019  JP 2019106574
19.11.2019  JP 2019209141**

(43) Date of publication of application:
**09.12.2020 Bulletin 2020/50**

(73) Proprietor: **CANON KABUSHIKI KAISHA
OHTA-KU
Tokyo 146-8501 (JP)**

(72) Inventors:
• **TAKACHI, Miwa
Tokyo, 146-8501 (JP)**
• **KUBOTA, Reiko
Tokyo, 146-8501 (JP)**
• **WATANABE, Yo
Tokyo, 146-8501 (JP)**

(74) Representative: **WESER & Kollegen
Patentanwälte PartmbB
Radeckestraße 43
81245 München (DE)**

(56) References cited:
**EP-A1- 3 388 489       US-A1- 2015 361 270
US-A1- 2017 299 840**

(52) Cooperative Patent Classification (CPC): (Cont.)

C-Sets
**C09D 133/04, C08K 3/22, C08K 3/40, C08L 33/04,
C08L 2205/22**

**Description**

BACKGROUND OF THE INVENTION

Field of the Invention

The present invention relates to an article including a film, an optical apparatus including a film, a coating material, and a method for producing an article. In particular, the present invention relates to a film, a coating material, and an optical apparatus, the film being disposed on a surface of a lens barrel for an optical apparatus, such as a camera, a video, or broadcast equipment, or on another optical apparatus, such as a camera body, a surveillance camera, or a weather camera, that can be used outdoors.

Description of the Related Art

Films disposed on surfaces of optical apparatuses, such as cameras, videos, and broadcast equipment, are required to have good designs and functionality. For example, when an optical apparatus can be touched by a person at the time of photographing, fingerprints, oils and fats, and so forth often adhere to the optical apparatus. Thus, the optical apparatus is required to have smudge resistance. To make it difficult to leave a fingerprint, a hydrophilic coating material is used for optical apparatuses and permits smudges to spread out. Alternatively, a hydrophobic coating material, such as a fluorocarbon, is used. A technique is known for reducing the leaving of smudges by using a surface having an uneven structure to reduce the contact area between smudges and the surface.
Such optical apparatuses are often used outdoors and thus are also required to have heat-shielding properties under severe sunlight conditions in equatorial regions and so forth in addition to the smudge-resistant function.
Japanese Patent Application Laid-Open No. H09-302272 discloses a coating material that contains resin beads and that can form a well-designed uneven pattern.
In Japanese Patent Application Laid-Open No. H09-302272, the uneven structure reduces the adhesion of fingerprints and so forth, but is less effective in shielding heat because the resin beads transmit sunlight. In the case where an optical apparatus is used under severe sunlight conditions in an equatorial region or the like, the performance of the optical apparatus may be decreased, for example, by the deformation of a base material.
US 2015/361270 A1 discloses an ink for a white reflecting film used as a coating on top of an aluminium plate.
EP 3 388 489 A1 discloses a film and a paint comprising a resin, titanium oxide particles and inorganic particles.
US 2017/299840 A1 discloses a thermal barrier film comprising titanium oxide particles and hollow silica particles.

SUMMARY OF THE INVENTION

To solve the foregoing problems, the present invention provides an article including a film on a surface thereof, the film having smudge resistance for preventing leaving smudges, such as fingerprints, and having excellent heat-shielding properties against sunlight, and a coating material.
One aspect of the present invention is directed to providing an article as defined in claim 1.
Another aspect of the present invention is directed to providing a coating material as defined in claim 6.
The dependent claims relate to further developments.
Further features of the present invention will become apparent from the following description of exemplary embodiments with reference to the attached drawings.

BRIEF DESCRIPTION OF THE DRAWINGS

FIG. 1 is a schematic view illustrating a first embodiment.
FIG. 2A illustrates a second embodiment.
FIG. 2B illustrates the second embodiment.
FIG. 2C illustrates the second embodiment.
FIG. 3A is an external view of an interchangeable camera lens as an example of an optical apparatus using the present invention.
FIG. 3B is a cross-sectional view of a digital single-lens reflex camera as an example of an optical apparatus using the present invention.
FIG. 4 is a schematic view illustrating a temperature evaluation method.

DESCRIPTION OF THE EMBODIMENTS

Embodiments of the present invention will be described below.

(First Embodiment)

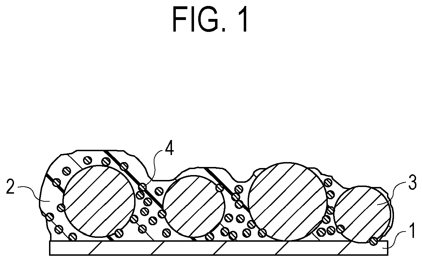

FIG. 1 is a partial cross-sectional view of an example of an article according to a first embodiment of the present invention. In FIG. 1, reference numeral 1 denotes a base material. A coating material according to this embodiment is applied to the base material composed of a plastic material or a metal to form a film having excellent heat-shielding performance (film according to this embodiment) on a surface of the base material.

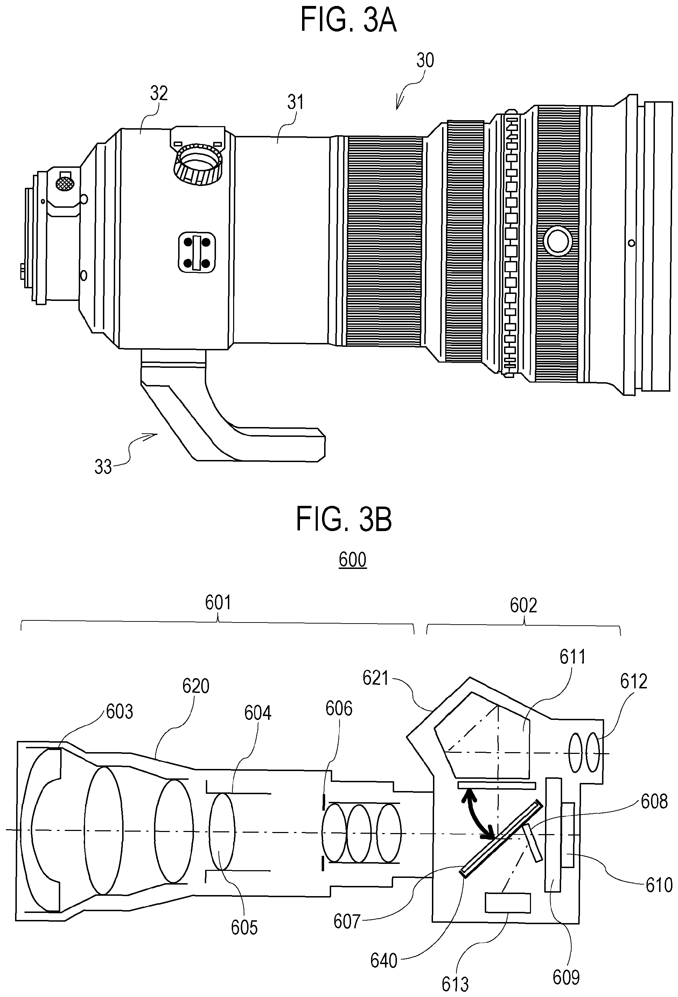

That is, the article according to this embodiment includes the film having excellent heat-shielding performance (film according to this embodiment) on the surface thereof. The article according to this embodiment can be used particularly for optical apparatuses. Examples of optical apparatuses include interchangeable lenses for cameras, videos, broadcast equipment, and so forth. Other example thereof include camera bodies, video camera bodies, surveillance cameras, and weather cameras, which are image forming apparatuses configured to form images using light transmitted through lenses and which may be used outdoors. The optical apparatus includes the film according to this embodiment on a portion (referred to as an "outer surface") of the optical apparatus to be irradiated with sunlight when used outdoors, and thus has a higher heat-shielding effect. FIG. 3A illustrates the appearance of an interchangeable camera lens including a lens barrel having a holding section configured to hold lens elements, as an example of the optical apparatus. The interchangeable lens includes a lens barrel 30 and a tripod mount 33. The lens barrel 30 includes lens elements, a fixed barrel 31, a ring-shaped member 32, and so forth. The optical apparatus includes films excellent in heat-shielding performance (films according to this embodiment) on surfaces of the fixed barrel 31 and the ring-shaped member 32 of the lens barrel 30, the tripod mount 33, and so forth. A decrease in accuracy can be suppressed by suppressing the deformation of the fixed barrel 31, the ring-shaped member 32, the tripod mount 33, and so forth due to heat, thereby enabling the formation of highly accurate images. The material of each of the fixed barrel 31, the ring-shaped member 32, and the tripod mount 33 may be, but is not particularly limited to, a plastic material or a metal.

The film according to this embodiment at least contains a resin 2, beads 3, and titanium oxide 4. The incorporation of the beads 3 results in an uneven surface and is less likely to leave smudges, such as fingerprints. In this specification, the beads 3 may be referred to as "first particles".

The material of the beads 3 contained in the film according to this embodiment is not particularly limited, and may be any of inorganic and organic materials. In the case of inorganic beads, silica, glass, or silicon beads can be used. In the case of organic beads, resin beads having high transparency and low specific gravity can be used. For example, one or more resins selected from acrylic resins, epoxy resins, polyester resins, polyolefin resins, polyurethane resins, and melamine resins may be contained. The type thereof can be selected in accordance with the base material, applications, and so forth.

The shape of the beads 3 according to this embodiment can be a spherical shape for the purpose of forming an uneven structure. The term "spherical shape" used in this specification refers to a shape with an average circularity of 0.8 or more. An average circularity of 0.8 or more is determined as follows: Five cross-sectional samples of the film are taken and magnified with a microscope. Ten cross-sections of the beads 3 are observed for each sample. The average circularity of the 10 cross sections × 5 samples of the beads 3 is 0.8 or more. The circularity is calculated from the following formula: Circularity = $4\pi$(cross-sectional area)/(cross-sectional perimeter)$^2$.

In this specification, the cross section of the film is defined as a section obtained by cutting the film in a direction parallel to a direction normal to a surface of the film. In the case of an uneven surface of the film, the direction normal to a surface of the film refers to a direction normal to a plane obtained by the connection of protruding points.

The beads 3 have an average particle diameter of more than 5 $\mu$m and 50 $\mu$m or less, more preferably 10 $\mu$m or more and 30 $\mu$m or less. When the beads according to this embodiment have an average particle diameter of 5 $\mu$m or less, the uneven structure is not easily formed; thus, smudges are easily left. At an average particle diameter of more than 50 $\mu$m, the beads may be exposed at a surface of the film. If the beads are exposed, the design deteriorates. In this specification, the beads (first particles) are defined as particles having an average particle diameter of more than 5 $\mu$m and 50 $\mu$m or less. The average particle diameter of the beads 3 is a number-average particle diameter. In the state of a coating material before application, the average particle diameter can be measured by a dynamic light scattering method. In the case where the average particle diameter is measured from the state of a film, the measurement is performed as follows: Cross-sectional samples are taken at five locations of the film according to this embodiment and magnified with a microscope. The beads 3 located at the five locations are subjected to surface analysis by energy dispersive X-ray spectroscopy (EDS) to determine the particle diameters of the beads 3. Then the average value of the particle diameters is calculated. In this specification, the maximum transverse length of each particle is defined as a particle diameter. The diameters of 10 or more particles per location are measured, and then the average diameter is calculated. Finally, the average value of the average particle diameters at the five locations is calculated. The resulting average value at the five locations is defined as the average particle diameter of the beads 3 contained in the film according to this embodiment.

The amount of the beads 3 contained is preferably 5% by area or more and 80% by area or less, more preferably 30% by area or more and 60% by area or less. When the amount of the beads 3 contained is less than 5% by area, the uneven structure may be sparsely distributed to deteriorate the smudge resistance. When the amount of the beads 3 contained is more than 80% by area, adhesion to the base material may be deteriorated. The amount of beads contained in the film according to this embodiment can be measured as follows: Cross sections of the film according to this embodiment are taken at five locations and magnified with a microscope. The cross sections of the film are cut out in a direction parallel to a direction normal to a surface of the film. The beads located at the five locations are subjected to surface analysis by energy dispersive X-ray spectroscopy (EDS) to calculate the amounts of beads contained per unit area. Finally, the amount of beads contained in the film according to this embodiment is calculated from the average values at the five locations, and the resulting value is defined as the amount of beads contained in the film (% by area). In this specification, the content per unit area is expressed as content by area (%) or % by area.

The incorporation of the beads in the film results in an uneven surface and is less likely to leave smudges, such as fingerprints. However, most of visible or near-infrared rays that affect the heat-shielding performance pass through the beads in the film and reach the base material; thus, the reflectance as a whole decreases, and the heat shielding performance decreases. That is, light passing through the beads 3 reaches the base material, thus decreasing the heat-shielding performance. To deal with this, the film according to this embodiment contains 10% by area or more and 80% by area or less, preferably 30% by area or more and 60% by area or less titanium oxide. The amount of the titanium oxide contained (% by area) is 1/5 or more of the amount of the beads contained (% by area). The titanium oxide according to this embodiment has high solar reflectance. The solar reflectance of the titanium oxide alone is more than 10%. When the titanium oxide is contained in an amount of 10% by area or more and 80% by area or less, preferably 30% by area or more and 60% by area or less, a larger amount of titanium oxide can be arranged around the beads. When the amount of the titanium oxide contained is 1/5 or more of the amount of the beads contained, a larger amount of titanium oxide can be arranged around the beads. The inventors have found that this makes it possible to provide desired heat-shielding performance even in the case of the film containing the beads 3.

The film according to this embodiment preferably has a lightness of 20 or more and 95 or less, more preferably 50 or more and 80 or less. The titanium oxide 4 is white in color; thus, the lightness of the film can be adjusted to 50 or more. In this embodiment, when the film has a lightness of less than 25, the solar reflectance is decreased to deteriorate the effect of reducing the temperature. When the film formed from the coating material according to this embodiment has a lightness of more than 95, the film has an excessively high degree of whiteness; thus, smudges may be noticeable.

The surface of titanium oxide contained in the film according to this embodiment may be coated with, for example, silica in order to block the photocatalytic action under oxygen-free conditions.

The titanium oxide has an average particle diameter of 10 nm or more and 5 $\mu$m or less, more preferably 100 nm or more and 3 $\mu$m or less. When the titanium oxide according to this embodiment has an average particle diameter of less than 10 nm, the surface area of the particles is increased to enhance the photocatalytic action. Thus, the molecular chains of the resin 2 may be cleaved to cause discoloration. When the titanium oxide according to this embodiment has an average particle diameter of more than 5 $\mu$m, it is difficult to uniformly disperse the titanium oxide in the film; thus, the heat-shielding performance may be deteriorated.

The particle diameter of the titanium oxide 4 is a number-average particle diameter. In the state of a coating material before application, the average particle diameter can be measured by a dynamic light scattering method. In the case where the average particle diameter is measured from the state of a film, the measurement is performed as follows: Cross-sectional samples are taken at five locations of the film according to this embodiment and magnified with a microscope. The titanium oxide 4 located at the five locations is subjected to surface analysis by energy dispersive X-ray spectroscopy (EDS) to determine the particle diameters of the titanium oxide 4. Then the average value of the particle diameters is calculated. The diameters of 10 or more particles per location are measured, and then the average diameter is calculated. Finally, the average value of the average particle diameters at the five locations is calculated. The resulting average value at the five locations is defined as the average particle diameter of the titanium oxide 4 contained in the film according to this embodiment.

The amount of the titanium oxide 4 contained in the film according to this embodiment can be measured as follows: The amount of the beads contained (% by area) in the film according to this embodiment is calculated by the method described above. Cross sections of the film are taken from five portions that are adjacent to the beads and that contain no beads, and cross sections of the film are taken from five portions between the beads. These sections are magnified. The titanium oxide is subjected to surface analysis by energy dispersive X-ray spectroscopy (EDS) at the respective five portions. The amount of titanium oxide (% by area) contained in a region having an area percentage determined by subtracting the amount of the beads contained (% by area) from 100% is calculated. For example, in the case where the amount of the beads contained is 40% by area, the area percentage of the region determined by subtracting the amount of the beads contained (% by area) from 100% is 60% by area. When the region having an area percentage of 60% by area contains 50% by area of the titanium oxide, the amount of the titanium oxide contained is 30% by area. Finally, the average value of the average values at the respective five portions is calculated and defined as the amount of the titanium oxide (% by area) contained in the film.

(Resin)

The amount of the resin 2 contained in the film according to this embodiment is preferably 5% by area or more and 80% by area or less, more preferably 30% by area or more and 60% by area or less. When the amount of the resin 2 contained in the film according to this embodiment is less than 5% by area, adhesion to the base material may be deteriorated. When the amount of the resin 2 contained in the film according to this embodiment is more than 80% by area, the uneven structure having smudge resistance may not be obtained. Examples of the resin 2 contained in the film according to this embodiment include, but are not particularly limited to, cured products of epoxy resins, urethane resins, acrylic resins, urethane-acrylic resins, phenolic resins, or alkyd resins. Such a cured product may be composed of a single resin or may contain multiple resins.

The amount of the resin 2 contained in the film according to this embodiment can be measured as follows: The amount of the beads contained (% by area) in the film according to this embodiment is calculated by the method described above. Cross sections of a portion of the film that contains no beads are taken at five locations and magnified with a microscope. The resin portions located at the five locations are subjected to surface analysis by energy dispersive X-ray spectroscopy (EDS). The amount of the resin (% by area) contained in a region having an area percentage determined by subtracting the amount of the beads contained (% by area) from 100% is calculated. For example, in the case where the amount of the beads contained is 40% by area, the area percentage of the region determined by subtracting the amount of the beads contained (% by area) from 100% is 60% by area. When the region having an area percentage of 60% by area contains 50% by area of the resin, the amount of the resin contained is 30% by area. Finally, the average value of the average values at the five locations is calculated and defined as the amount of the resin (% by area) contained in the film.

(Base Material)

As the base material, any material can be used. A metal or a plastic material can be used. Examples of the metal material include aluminum, titanium, stainless steel, magnesium alloys, and lithium-magnesium alloys. Examples of the plastic material include polycarbonate resin, acrylic resins, ABS resins, fluorocarbon resins, polyester resins, melamine resins, and vinyl chloride resins.

The base material can have any thickness, preferably has a thickness of 0.5 mm or more and 5 mm or less, more preferably 0.5 mm or more and 2 mm or less. At a thickness of less than 0.5 mm, it is difficult to maintain the shape of the lens barrel. At a thickness of more than 5 mm, the cost of the member is increased.

(Primer)

A primer may be disposed at the interface between the base material and the film for the purpose of improving the adhesion of the base material to the film.

As the primer, any material can be used. Examples thereof include epoxy resins, urethane resins, acrylic resins, silicone resins, and fluorocarbon resins. The primer may contain the particles according to this embodiment and particles other than the particles according to this embodiment. Additionally, the primer may contain residues of a colorant, a dispersant, a curing agent, a curing catalyst, a plasticizer, a thixotropy imparting agent, a leveling agent, an organic colorant, an inorganic colorant, a preservative, an ultraviolet absorber, an antioxidant, a coupling agent, and a solvent.

The primer preferably has a thickness of 2 $\mu$m or more and 50 $\mu$m or less, more preferably 5 $\mu$m or more and 30 $\mu$m or less. A thickness of less than 2 $\mu$m may result in a decrease in the adhesion of the film. A thickness of more than 50 $\mu$m may result in an adverse effect on positional accuracy.

In this specification, both the base material and the primer may be referred to as the "base material". That is, the base material may include the primer in this specification.

(Thickness of Film)

The film according to this embodiment can have a thickness of 20 $\mu$m or more and 70 $\mu$m or less. A thickness of less than 20 $\mu$m may result in a decrease in solar reflectance. A thickness of more than 70 $\mu$m may result in an adverse effect on the positional accuracy of the optical apparatus.

(Particles Other Than Titanium Oxide for Adjusting Lightness of Film)

The film according to this embodiment may contain particles (colorant) other than the titanium oxide 4 for adjusting lightness. The material of the particles is not particularly limited. A known pigment having high infrared reflection performance can be used. For example, a quinacridone-based pigment, a perylene-based pigment, or an azo-based pigment can be contained. As the azo-based pigment, particles composed of any of azo group-containing compounds can be used. Examples of the color of the azo-based pigment contained in the film according to this embodiment include black-based colors, yellow-based colors, red-based colors, and orange-based colors. Black-based colors can be used because of a small change in tint (a*, b*) when fading due to sunlight occurs. A material having high solar reflectance can be used. A material in which the solar reflectance of an azo-based pigment alone is more than 10% can be used. Examples of the azo-based pigment include nickel azo pigments, insoluble azo-based pigments, soluble azo-based pigments, high-molecular-weight azo-based pigments, azomethine azo-based pigments. These azo-based pigments may be contained alone or in combination.

The azo-based pigment contained in the film according to this embodiment preferably has an average particle diameter of 10 nm or more and 5 $\mu$m or less, more preferably 50 nm or more and 2 $\mu$m or less. An average particle diameter of less than 10 nm results in an increase in the surface area of the particles to deteriorate the lightfastness, thereby possibly causing discoloration. An average particle diameter of more than 5 $\mu$m makes it difficult to uniformly disperse titanium oxide in the film, thereby possibly deteriorating the heat-shielding performance. The average particle diameter of the azo-based pigment is a number-average particle diameter. In the state of a coating material before application, the average particle diameter can be measured by a dynamic light scattering method. In the case where the average particle diameter is measured from the state of a film, the measurement is performed as follows: Cross-sectional samples are taken at five locations of the film according to this embodiment and magnified with a microscope. The cross sections of the film can be cut out in a direction parallel to a direction normal to a surface of the film. The azo-based pigment located at the five locations is subjected to surface analysis by energy dispersive X-ray spectroscopy (EDS) to determine the particle diameters of the azo-based pigment. Then the average value of the particle diameters is calculated. The diameters of 10 or more particles per location are measured, and then the average diameter is calculated. Finally, the average value of the average particle diameters at the five locations is calculated. The resulting average value at the five locations is defined as the average particle diameter of the azo-based pigment contained in the film according to this embodiment.

The amount of the azo-based pigment contained in the film according to this embodiment is preferably 0.1% by area or more and 0.4% by area or less, more preferably 0.15% by area or more and 0.3% by area or less. When the amount of the azo-based pigment contained is less than 0.1% by area, the film has excessively high lightness; thus, smudge resistance is deteriorated. When the amount of the azo-based pigment contained is more than 0.4% by area, the film has insufficient lightness; thus, the solar reflectance is decreased. The amount of the azo-based pigment contained in the film according to this embodiment can be measured as follows: The amount of the beads contained (% by area) in the film according to this embodiment is calculated by the method described above. Cross sections of a portion of the film that contains no beads are taken at five locations and magnified with a microscope. The resin portions located at the five locations are subjected to surface analysis by energy dispersive X-ray spectroscopy (EDS). The amount of the azo-based pigment (% by area) contained in a region having an area percentage determined by subtracting the amount of the beads contained (% by area) from 100% is calculated. For example, in the case where the amount of the beads contained is 40% by area, the area percentage of the region determined by subtracting the amount of the beads contained (% by area) from 100% is 60% by area. When the region having an area percentage of 60% by area contains 1% by area of the azo-based pigment, the amount of the azo-based pigment contained is 0.6% by area. Finally, the average value of the average values at the five locations is calculated and defined as the amount of the azo-based pigment (% by area) contained in the film.

(Silica Particles)

The film according to this embodiment may further contain silica particles. The silica can have an average particle diameter of 10 nm or more and 5 $\mu$m or less. When the silica according to this embodiment has an average particle diameter of less than 10 nm, the uneven surface structure is not easily formed; thus, smudges are easily left. An average particle diameter of more than 5 $\mu$m results in an increase in the unevenness of the coating film, thereby possibly deteriorating the accuracy of the film thickness.

The silica particles can have any shape. Examples of the shape of the silica particles include spherical shapes, indefinite shapes, star shapes, chain shapes, hollow shapes, and porous shapes. These silica particles may be used alone or may be contained in combination.

The particle diameter of the silica particles according to this embodiment is a number-average particle diameter. In the state of a coating material before application, the average particle diameter of the silica particles can be measured by a dynamic light scattering method. In the case where the average particle diameter is measured from the state of a film, the measurement is performed as follows: The amount of the beads contained (% by area) in the film according to this embodiment is calculated by the method described above. Cross sections of a portion of the film that contains no beads are taken at five locations and magnified with a microscope. The resin portions located at the five locations are subjected to surface analysis by energy dispersive X-ray spectroscopy (EDS). The amount of the silica particles (% by area) contained in a region having an area percentage determined by subtracting the amount of the beads contained (% by area) from 100% is calculated. For example, in the case where the amount of the beads contained is 40% by area, the area percentage of the region determined by subtracting the amount of the beads contained (% by area) from 100% is 60% by area. When the region having an area percentage of 60% by area contains 1% by area of the silica particles, the amount of the silica particles contained is 0.6% by area. Finally, the average value of the average values at the five locations is calculated and defined as the amount of the silica particles (% by area) contained in the film.

(Other Additives)

The film according to this embodiment may further contain other freely-selected additives. Examples thereof include dispersants, curing agents, curing catalysts, plasticizers, thixotropy imparting agents, leveling agents, flatting agents, preservatives, ultraviolet absorbers, antioxidants, coupling agents, and fine inorganic particles and fine organic particles other than those described above for the purpose of adjusting the tint.

<Coating Material>

Next, the coating material according to this embodiment and a method for producing the coating material will be described below.

The coating material according to this embodiment at least contains a resin, beads, and titanium oxide.

(Beads)

The material of the beads contained in the coating material according to this embodiment is not particularly limited, and may be any of inorganic and organic materials. In the case of inorganic beads, silica, glass, or silicon beads can be used. In the case of organic beads, resin beads having high transparency and low specific gravity can be used. For example, one or more resins selected from acrylic resins, epoxy resins, polyester resins, polyolefin resins, polyurethane resins, and melamine resins may be contained.

The shape of the beads according to this embodiment can be a spherical shape for the purpose of forming an uneven structure. The beads have an average particle diameter of more than 5 $\mu$m and 50 $\mu$m or less, more preferably 10 $\mu$m or more and 30 $\mu$m or less. When the beads according to this embodiment have an average particle diameter of 5 $\mu$m or less, smudges are easily left. At an average particle diameter of more than 50 $\mu$m, the beads may be exposed at a surface of the film. If the beads are exposed, the design deteriorates. The average particle diameter of the beads is a number-average particle diameter and can be measured by a dynamic light scattering method.

The amount of the beads contained in the coating material according to this embodiment is 0.5% by mass or more and 20% by mass or less, more preferably 1% by mass or more and 15% by mass or less with respect to nonvolatile components in the coating material. When the amount of the beads contained is less than 0.5% by mass, the uneven structure may be sparsely distributed to deteriorate the smudge resistance. When the amount of the beads contained is more than 20% by mass, adhesion to the base material may be deteriorated. The amount of the beads with respect to the nonvolatile components in the coating material can be measured by centrifugation and separation of sediments.

(Titanium Oxide)

The surface of titanium oxide contained in the coating material according to this embodiment may be coated with, for example, silica in order to block the photocatalytic action under oxygen-free conditions.

The titanium oxide has an average particle diameter of 10 nm or more and 5 $\mu$m or less, more preferably 100 nm or more and 1 $\mu$m or less. When the titanium oxide according to this embodiment has an average particle diameter of less than 10 nm, the surface area of the particles is increased to enhance the photocatalytic action. Thus, the molecular chains of the resin 2 may be cleaved to cause discoloration. When the titanium oxide according to this embodiment has an average particle diameter of more than 5 $\mu$m, it is difficult to uniformly disperse the titanium oxide in the film; thus, the heat-shielding performance may be deteriorated.

The particle diameter of the titanium oxide 4 is a number-average particle diameter. In the state of a coating material before application, the average particle diameter can be measured by a dynamic light scattering method.

The amount of the titanium oxide contained in the coating material according to this embodiment is 20% by mass or more and 55% by mass or less, more preferably more than 20% by mass and 45% by mass or less with respect to nonvolatile components in the coating material. When the amount of the titanium oxide according to this embodiment is less than 20% by mass, the heat-shielding effect is decreased. When the amount of the titanium oxide according to this embodiment is more than 55% by mass, the titanium oxide is not uniformly dispersed in a coating film to cause the nonuniformity of the film. Separation is performed by appropriate centrifugation to obtain sediments. The sediments are analyzed with a Fourier transform infrared spectrophotometer (FT-IR). In this specification, the content with respect to the nonvolatile components in the coating material is referred to as content by mass (%) or % by mass.

(Resin)

Examples of the resin contained in the coating material according to this embodiment include, but are not particularly limited to, epoxy resins, urethane resins, acrylic resins, urethane-acrylic resins, phenolic resins, and alkyd resins. These resins may be contained alone or in combination.

The amount of the resin contained in this coating material according to this embodiment is preferably 5% by mass or more and 80% by mass or less, more preferably 15% by mass or more and 50% by mass or less. When the amount of the resin contained in the coating material according to this embodiment is less than 5% by mass, adhesion to the base material may be deteriorated. When the amount of the resin contained in the coating material according to this embodiment is more than 50% by mass, the uneven structure having smudge resistance may not be obtained. The amount of the resin contained with respect to nonvolatile components in the coating material can be measured by separating sediments using appropriate centrifugation and analyzing the sediments with a Fourier transform infrared spectrophotometer (FT-IR).

(Particles Other Than Titanium Oxide for Adjusting Lightness of Film)

The coating material according to this embodiment may contain particles (colorant) other than the titanium oxide for adjusting lightness. The material of the particles is not particularly limited. A known pigment having high infrared reflection performance can be used. For example, a quinacridone-based pigment, a perylene-based pigment, or an azo-based pigment can be contained. As the azo-based pigment, particles composed of any of azo group-containing compounds can be used. Examples of the color of the azo-based pigment contained in the coating material according to this embodiment include black-based colors, yellow-based colors, red-based colors, and orange-based colors. Black-based colors can be used because of a small change in tint (a*, b*) when fading due to sunlight occurs. A material having high solar reflectance can be used. A material in which the solar reflectance of an azo-based pigment alone is more than 10% can be used. Examples of the azo-based pigment include nickel azo pigments, insoluble azo-based pigments, soluble azo-based pigments, high-molecular-weight azo-based pigments, azomethine azo-based pigments. These azo-based pigments may be contained alone or in combination.

The azo-based pigment contained in the coating material according to this embodiment preferably has an average particle diameter of 10 nm or more and 5 $\mu$m or less, more preferably 50 nm or more and 2 $\mu$m or less. An average particle diameter of less than 10 nm results in an increase in the surface area of the particles to deteriorate the lightfastness, thereby possibly causing discoloration. An average particle diameter of more than 5 $\mu$m makes it difficult to uniformly disperse titanium oxide in the film, thereby possibly deteriorating the heat-shielding performance. The average particle diameter of the azo-based pigment is a number-average particle diameter and can be measured by a dynamic light scattering method.

The amount of the azo-based pigment contained in the coating material according to this embodiment is preferably 0.1% by mass or more and 1.0% by mass or less, more preferably 0.15% by mass or more and 0.5% by mass or less with respect to nonvolatile components in the coating material. When the amount of the azo-based pigment contained is less than 0.1% by area, the resulting film has excessively high lightness; thus, smudge resistance may be deteriorated. When the amount of the azo-based pigment contained is more than 1.0% by mass, the resulting film has insufficient lightness; thus, the solar reflectance is decreased. The amount of the azo-based pigment contained with respect to nonvolatile components in the coating material can be measured by separating sediments using appropriate centrifugation and analyzing the sediments with a Fourier transform infrared spectrophotometer (FT-IR).

As particles for adjusting the lightness of the film, a material other than titanium oxide or the azo-based pigment may be contained. Examples of the material include alumina, zirconia, silica, hollow silica, zinc oxide, and pigments. These materials may be used alone or in combination. Fine inorganic particles, fine organic particles, and so forth may be used in order to adjust the desired lightness, glossiness, and tint.

(Silica Particles)

The coating material according to this embodiment may further contain silica particles. The silica can have an average particle diameter of 10 nm or more and 5 $\mu$m or less. When the silica according to this embodiment has an average particle diameter of less than 10 nm, the uneven surface structure is not easily formed; thus, smudges are easily left. An average particle diameter of more than 5 $\mu$m results in an increase in the unevenness of the coating film, thereby possibly deteriorating the accuracy of the film thickness.

The silica particles can have any shape. Examples of the shape of the silica particles include spherical shapes, indefinite shapes, star shapes, chain shapes, hollow shapes, and porous shapes. These silica particles may be used alone or may be contained in combination.

The particle diameter of the silica particles according to this embodiment is a number-average particle diameter. In the state of a coating material before application, the average particle diameter of the silica particles can be measured by a dynamic light scattering method.

The amount of the silica particles contained is 0.5% by mass or more and 10% by mass or less, preferably 1% by mass or more and 5% by mass or less with respect to nonvolatile components in the coating material. When the amount of the silica particles contained is less than 0.5% by mass, reflected light from a surface of the resulting film may adversely affect image quality. When the amount of the silica particles contained in this embodiment is more than 10% by mass, the silica particles may be sedimented in the coating material. The amount of the silica particles with respect to the nonvolatile components in the coating material can be measured by separating sediments using appropriate centrifugation and analyzing the sediments with a Fourier transform infrared spectrophotometer (FT-IR).

(Solvent)

The coating material according to this embodiment further contains a solvent.

Examples of the solvent include, but are not particularly limited to, water, thinners, ethanol, isopropyl alcohol, n-butyl alcohol, ethyl acetate, propyl acetate, isobutyl acetate, and butyl acetate. Other examples thereof include methyl ethyl ketone, methyl isobutyl ketone, propylene glycol monomethyl ether, toluene, xylene, acetone, cellosolves, glycol ethers, and ethers. These solvents may be used alone or in combination.

The coating material according to this embodiment preferably has a viscosity of 10 mPa·s or more and 10,000 mPa·s or less, more preferably 50 mPa·s or more and 500 mPa·s or less. When the coating material has a viscosity of less than 10 mPa·s, a heat-shielding film after application may have some portions having a smaller thickness. A viscosity of more than 10,000 mPa·s may result in a deterioration in the application properties of the coating material.

(Other Additives)

The coating material according to this embodiment further contain other freely-selected additives. Examples thereof include dispersants, curing agents, curing catalysts, plasticizers, thixotropy imparting agents, leveling agents, flatting agents, preservatives, ultraviolet absorbers, antioxidants, coupling agents, and fine inorganic particles and fine organic particles other than those described above for the purpose of adjusting the tint.

<Method for Producing Coating Material Used for Formation of Film on Surface of Optical Apparatus>

A method for producing the coating material according to this embodiment will be described below.

Any method for producing the coating material for the formation of a film on a surface of the optical apparatus may be employed as long as resin beads and silica-coated titanium oxide according to this embodiment can be dispersed in the coating material. Examples of a device for use in the method include bead mills, ball mills, jet mills, three-roll mills, planetary rotation devices, mixers, ultrasonic dispersers, and homogenizers.

<Method for Producing Article>

In a method for producing the article according to this embodiment, any application method and any curing method may be employed as long as the coating material according to this embodiment can be uniformly applied to the base material to a thickness of 20 μm or more and 70 μm or less.

Examples of the application method include brush coating, spray coating, dip coating, and transfer coating. The film according to this embodiment may be formed by single-layer coating or multilayer coating.

Regarding the curing method, the resulting coating film may be allowed to stand at room temperature, may be heated to promote curing, or may be cured by irradiation with ultraviolet radiation. Examples of a method for curing by the application of heat include a method using a heating oven, a method using a heater, and a method using infrared heating. The curing temperature is preferably in the range of room temperature to 400°C, more preferably room temperature to 200°C.

As described above, the article according to this embodiment includes the film (film according to this embodiment) having excellent heat-shielding performance on a surface thereof, the film being formed by applying the coating material according to this embodiment to the base material.

According to this embodiment, it is possible to provide the article, such as the optical apparatus, including the film on the surface thereof, the film having smudge resistance for preventing leaving smudges, such as fingerprint smudges, and having excellent heat-shielding properties against sunlight, and the coating material.

(Second Embodiment)

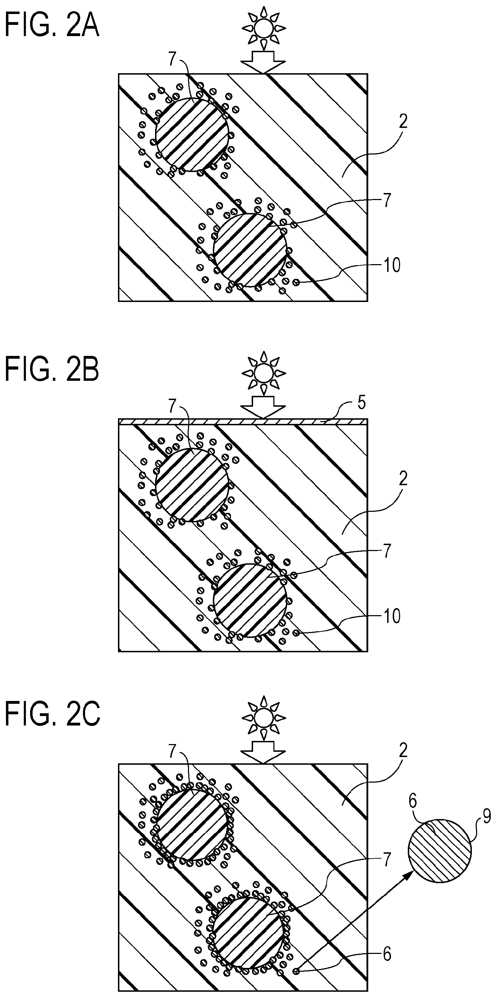

A second embodiment will be described below. FIGS. 2A to 2C illustrate the second embodiment. Elements similar to those in the first embodiment are designated using the same reference numerals as those in the first embodiment, and the detailed descriptions and drawings are omitted.

In an article according to this embodiment, a coating material according to this embodiment is applied to a base material composed of a plastic material or a metal to form a film having excellent heat-shielding performance (film according to this embodiment) on a surface of the base material. That is, the article according to this embodiment includes the film having excellent heat-shielding performance (film according to this embodiment) on the surface of the base material. The film according to this embodiment at least contains a resin, beads composed of a resin (resin beads), and titanium oxide having a surface coated with silica. The material of the beads contained in the film according to the first embodiment is not particularly limited, whereas this embodiment solves a problem arising when resin beads are used. As with the first embodiment, the incorporation of resin beads 7 results in an uneven surface and is less likely to leave smudges, such as fingerprints. Titanium oxide added for color adjustment of the film or for enhancing the heat-shielding effect is not particularly limited in the first embodiment, whereas in this embodiment, titanium oxide having a surface coated with silica is used.

In the case where resin beads are used, it has been found that the following problems are encountered when the surface of the titanium oxide is not coated with silica. FIG. 2A illustrates a state of the resin beads 7 and titanium oxide 10 in the film, the titanium oxide 10 having a surface that is not coated. In the case where the beads are composed of a resin, the resin beads 7 and the titanium oxide 10 behave as follows during the film formation process: The titanium oxide 10 having a positive zeta potential is drawn around the beads 7 composed of a resin having a negative zeta potential. However, the repulsive force acts between the particles of the titanium oxide 10 because of a high positive value of the titanium oxide 10. As a result, the particles of the titanium oxide 10 tend to separate from one another. It is thus difficult to coat the surfaces of the beads with the titanium oxide 10 (it is difficult to increase the coverage). When the film in this state is irradiated with sunlight, because the titanium oxide 10 is gathered to some extent around the beads, the titanium oxide 10 reflects sunlight to provide the heat-shielding effect to some extent. However, when a tape 5 or the like is applied to a surface of the film as illustrated in FIG. 2B, the inside of the film is in an oxygen-free state. In this oxygen-free state, the titanium oxide 10 located around the resin beads 7 is activated by the photocatalytic action of sunlight and deteriorates the resin beads 7. The film is peeled or cracked from the portion where the resin beads 7 have deteriorated.

The inventors have found that coating the surface of the titanium oxide with silica prevents the deterioration of the resin beads due to sunlight in an oxygen-free state, as will be described in this embodiment.

As illustrated in FIG. 2C, the film according to this embodiment contains the resin beads 7 and titanium oxide 6 having a surface coated with silica 9. In the film, the titanium oxide 6 coated with the silica 9 having a negative zeta potential is densely present (with high coverage) around the resin beads 7 having a negative zeta potential. This is because the high positive value of titanium oxide is relaxed by silica to reduce the repulsive force, so that the resin beads 7 can be densely coated with titanium oxide.

In the film according to this embodiment, the titanium oxide can be densely arranged around the resin beads 7. Thus, even if the amount of the titanium oxide contained in the film is lower than that described in the first embodiment, an excellent heat-shielding effect can be provided.

Even if the film according to this embodiment is irradiated with sunlight, the sunlight is reflected by the surrounding titanium oxide; thus, the lightfastness is maintained. Furthermore, even in the case where the film is irradiated with sunlight in an oxygen-free state while a tape is applied to the film, since the titanium oxide 6 is coated with the silica 9, the photocatalytic action of the titanium oxide 6 can be blocked to prevent the deterioration of the resin.

As described above, the film according to this embodiment can maintain the smudge resistance and the lightfastness in an oxygen-free state.

That is, according to this embodiment, it is possible to provide the article, such as an optical apparatus, including the film having good design and heat-shielding performance on a surface thereof without fear of the peeling or cracking of the film.

(Beads)

The resin beads 7 contained in the film according to this embodiment will be described.

Any material of the resin beads 7 contained in the film according to this embodiment may be used as long as it is a resin. For example, one or more resins selected from acrylic resins, epoxy resins, polyester resins, polyolefin resins, polyurethane resins, and melamine resins may be contained.

(Silica-Coated Titanium Oxide)

Regarding the particles of the titanium oxide 6 having a surface coated with the silica 9 used in this embodiment, when at least part of the surface of each of the particles of the titanium oxide 6 is coated with the silica 9, the particles are regarded as the particles of the titanium oxide 6 having a surface coated with the silica 9. As the titanium oxide component of the titanium oxide 6 having a surface coated with the silica 9, rutile titanium oxide or anatase titanium oxide may be used. In the case of the titanium oxide 6 having a surface coated with the silica 9, the titanium oxide can be coated with the silica 9 in an area of 80% or more of the total surface area.

The amount of the titanium oxide 6 coated with the silica 9 contained in the film according to this embodiment is preferably 5% by area or more and 80% by area or less, more preferably 10% by area or more and 60% by area or less. Additionally, the amount of the titanium oxide 6 having a surface coated with the silica 9 contained is 1/6 or more of the amount of the resin beads contained. When the amount of the titanium oxide coated with the silica in the film according to this embodiment is less than 5% by area, the photocatalytic action is not sufficiently blocked during sunlight irradiation in an oxygen-free state; thus, it may be impossible to prevent the deterioration of the resin beads. When the amount of the titanium oxide coated with the silica is more than 80% by area, the particles are not uniformly dispersed in a coating film to cause the nonuniformity of the film.

The amount of the silica-coated titanium oxide contained in the film according to this embodiment can be measured as follows: The amount of the beads contained (% by area) in the film according to this embodiment is calculated by the method described above. Cross sections of the film are taken from five portions that are adjacent to the beads and that contain no beads, and cross sections of the film are taken from five portions between the beads. These sections are magnified. The titanium oxide is subjected to surface analysis by energy dispersive X-ray spectroscopy (EDS) at the respective five portions. The amount of titanium oxide (% by area) contained in a region having an area percentage determined by subtracting the amount of the beads contained (% by area) from 100% is calculated. For example, in the case where the amount of the beads contained is 40% by area, the area percentage of the region determined by subtracting the amount of the beads contained (% by area) from 100% is 60% by area. When the region having an area percentage of 60% by area contains 50% by area of the titanium oxide, the amount of the titanium oxide contained is 30% by area. Finally, the average value of the average values at the respective five portions is calculated and defined as the amount of the titanium oxide (% by area) contained in the film.

The average particle diameter of the silica-coated titanium oxide according to this embodiment is determined from the ratio of the average particle diameter of the resin beads to the average particle diameter of the silica-coated titanium oxide. When the average particle diameter of the silica-coated titanium oxide is defined as 1, the average particle diameter of the resin beads can be in the range of 30 or more and 300 or less. At less than 30, the difference in zeta potential between the resin beads and the silica-coated titanium oxide is small. Thus, the silica-coated titanium oxide is not attracted to the periphery of each resin bead. The resin beads transmit sunlight to decrease the reflectance of the entire film, thereby possibly deteriorating the heat-shielding effect. At more than 300, the difference in surface area is large, and a surface portion of each resin bead where no silica-coated titanium oxide is present (surface portion not coated with the silica-coated titanium oxide) is formed. When each resin bead has the surface portion where no silica-coated titanium oxide is present (surface portion not coated with the silica-coated titanium oxide), the resin beads have portions that transmit sunlight; thus, the reflectance of the entire film is decreased, thereby possibly deteriorating the heat-shielding effect.

From the range of the average particle diameter and the ratio of the average particle diameter of the resin beads described above, the average particle diameter of the silica-coated titanium oxide is 10 nm or more and 5 $\mu$m or less, more preferably 100 nm or more and 1 $\mu$m or less.

The base material, the primer, and so forth of the article according to this embodiment are the same as those in the first embodiment, and the descriptions thereof are omitted. Additionally, the resin, particles other than the silica-coated titanium oxide for adjusting the lightness of the film, silica particles, other additives, contained in the film according to this embodiment, the thickness, and so forth are the same as those in the first embodiment. Thus, the descriptions thereof are omitted.

<Coating Material>

A coating material according to this embodiment will be described below.

The coating material according to this embodiment at least contains a resin, resin beads, and silica-coated titanium oxide.

(Beads)

Any material of the resin beads 7 contained in the coating material according to this embodiment may be used as long as it is a resin. For example, one or more resins selected from acrylic resins, epoxy resins, polyester resins, polyolefin resins, polyurethane resins, and melamine resins may be contained.

(Titanium Oxide)

The average particle diameter of the silica-coated titanium oxide 6 according to this embodiment is determined from the ratio of the average particle diameter of the resin beads to the average particle diameter of the silica-coated titanium oxide. When the average particle diameter of the silica-coated titanium oxide 6 is defined as 1, the average particle diameter of the resin beads can be in the range of 30 or more and 300 or less. At less than 30, the difference in zeta potential between the resin beads and the silica-coated titanium oxide 6 is small. Thus, the silica-coated titanium oxide 6 is not attracted to the periphery of each of the resin beads 7. The resin beads 7 transmit sunlight to decrease the reflectance of the entire film, thereby possibly deteriorating the heat-shielding effect. At more than 300, the difference in surface area is large, and a surface portion of each of the resin beads 7 where no silica-coated titanium oxide 6 is present (surface portion not coated with the silica-coated titanium oxide) is formed. When each of the resin beads 7 has the surface portion where no silica-coated titanium oxide is present (surface portion not coated with the silica-coated titanium oxide), the resin beads 7 have portions that transmit sunlight; thus, the reflectance of the entire film is decreased, thereby possibly deteriorating the heat-shielding effect.

From the range of the average particle diameter and the ratio of the average particle diameter of the resin beads described above, the average particle diameter of the silica-coated titanium oxide 6 is 10 nm or more and 5 $\mu$m or less, more preferably 100 nm or more and 3 $\mu$m or less.

When the titanium oxide according to this embodiment has an average particle diameter of less than 10 nm, the surface area of the particles is increased to enhance the photocatalytic action. Thus, the molecular chains of the resin 2 may be cleaved to cause discoloration. When the titanium oxide according to this embodiment has an average particle diameter of more than 5 $\mu$m, it is difficult to uniformly disperse the titanium oxide in the film; thus, the heat-shielding performance may be deteriorated.

The average particle diameter of the silica-coated titanium oxide 6 is a number-average particle diameter. In the state of the coating material before application, the average particle diameter can be measured by a dynamic light scattering method.

The amount of the silica-coated titanium oxide contained in the film according to this embodiment is preferably more than 10% by mass and 55% by mass or less, more preferably more than 15% by mass and 45% by mass or less with respect to nonvolatile components in the coating material. When the amount of the silica-coated titanium oxide according to this embodiment is 10% by mass or less, the heat-shielding effect is deteriorated, and the photocatalytic action is not sufficiently blocked during sunlight irradiation in an oxygen-free state; thus, it may be impossible to prevent the deterioration of the resin beads. When the amount of the silica-coated titanium oxide is more than 55% by mass, the particles are not uniformly dispersed in a coating film to cause the nonuniformity of the film. The amount of the titanium oxide with respect to the nonvolatile components in the coating material can be measured by separating sediments using appropriate centrifugation and analyzing the sediments with a Fourier transform infrared spectrophotometer (FT-IR).

The resin, particles other than the titanium oxide for adjusting the lightness of the film, silica particles, a solvent, other additives, and so forth contained in the coating material according to this embodiment are the same as those in the first embodiment. Thus, the descriptions thereof are omitted.

(Another Embodiment)

FIG. 3B is a cross-sectional view of a digital single-lens reflex camera as an example of an optical apparatus using the present invention, the camera being attached to an interchangeable lens including a lens barrel having a holding section configured to hold lens elements.

The optical apparatus using the present invention refers to an apparatus, such as a binocular, a microscope, a semiconductor exposure apparatus, an interchangeable lens, or an electronic apparatus, e.g., a camera, including the film according to an embodiment of the present invention, and in particular, to an apparatus having an optical system including an optical element. Alternatively, the optical apparatus using the present invention refers to an apparatus configured to form an image using light that has passed through an optical element.

The optical apparatus using the present invention may also be an electronic apparatus, such as a camera system, e.g., a digital still camera or digital video camera, or a cellular phone, including an image pickup device configured to receive light that has passed through an optical element. The image pickup device may also be in the form of a module, such as a camera module, for an electronic apparatus.

The optical apparatus using the present invention can include the film having excellent heat-shielding performance according to an embodiment of the present invention (film according to this embodiment) on an exterior portion which is exposed to light such as sunlight and on which smudges such as fingerprints are left. In this case, it is possible to prevent the leaving of smudges such as fingerprints and reflect heat from, for example, sunlight off a surface of the optical apparatus. This enables the penetration of heat into the optical apparatus to suppress the deformation of precision components arranged inside the optical apparatus. Accordingly, it is possible to provide the optical apparatus having excellent heat-shielding performance.

In FIG. 3B, a camera body 602 is attached to an interchangeable lens 601, which is an optical apparatus, including a lens barrel that includes an outer barrel 620 on which a film according to an embodiment of the present invention is disposed. The interchangeable lens 601 is detachable to the camera body 602.

Light from a subject passes through an optical system including, for example, multiple lens elements 603 and 605 arranged on the optical axis of a photographing optical system in the interchangeable lens 601 and is received by an image pickup device.

The lens element 605 is supported by an inner barrel 604 of the lens barrel and movably supported for focusing and zooming with respect to the outer barrel 620 of the lens barrel. The outer barrel 620 of the lens barrel includes the film having excellent heat-shielding performance according to an embodiment of the present invention. This suppresses the deformation of the inner barrel 604 of the lens barrel. Thus, the lens 605 supported by the inner barrel 604 of the lens barrel can be maintained at a predetermined position.

During an observation period before shooting, light from a subject is reflected from a main mirror 607 in a housing 621 of the camera body and passes through a prism 611, thereby displaying a shooting image to a photographer through a finder lens 612. The main mirror 607 is, for example, a half mirror. Light passing through the main mirror is reflected from a sub-mirror 608 toward an autofocus (AF) unit 613. For example, the reflected light is used for ranging. The main mirror 607 is mounted and supported on a main-mirror holder 640 by bonding or the like. At the time of shooting, the main mirror 607 and the sub-mirror 608 are moved out of an optical path by means of a drive mechanism (not illustrated). A shutter 609 is opened to form a photographic light image incident from the interchangeable lens 601 on an image pickup device 610. A diaphragm 606 is configured to change the brightness and the depth of focus during shooting by changing the opening area.

EXAMPLES

Examples of the present invention will be described below. Among these, Examples 7 to 10, 18 and 19 are reference examples outside the scope of the invention as claimed.

The preparation of coating materials, the production of films, and the evaluation of the films in Examples 1 to 3 were performed by methods described below.

How to Determine Diameter and Content by Area of Particle in Film A measurement sample was measured in the form of a film. For the measurement sample, a film according to an embodiment of the present invention was formed on a polycarbonate resin plate measuring 50 mm wide, 70 mm long, and 1 mm thick and used. That is, a coating material was applied to the polycarbonate resin plate with a spin coater to a desired thickness and baked. The baked film was cut in a direction parallel to a direction normal to a surface of the film and observed with a field emission scanning electron microscope (FE-SEM). A target substance was subjected to surface analysis by energy dispersive X-ray spectroscopy (EDS) and then subjected to image processing to determine particle diameters of particles. The average value thereof was calculated. Regarding beads, the particle diameters of 10 or more particles per location were determined, and the average value thereof was calculated. Finally, the average value at five locations was determined.

The amount of a target substance contained was measured as follows: Cross sections of a film according to an embodiment were taken at five locations and observed with the field emission scanning electron microscope (FE-SEM). The cross sections of the film were cut out in the direction parallel to the direction normal to the surface of the film. The target substance located at the five locations were subjected to surface analysis by energy dispersive X-ray spectroscopy (EDS) and then subjected to image processing to calculate the amounts of the target substance contained per unit area. Finally, the amount of the target substance contained in the film according to the example was calculated from the average values, and the resulting value was defined as the amount of the target substance (% by area) contained in the film.

<Evaluation of Solar Reflectance>

Evaluation of solar reflectance will be described below. The solar reflectance was determined by measuring reflectance with a spectrophotometer (U-4000, available from Hitachi High-Tech Corporation) and then converting the resulting reflectance into solar reflectance.

Reflectance was measured by allowing light having a wavelength of 300 nm to 2,500 nm to be incident thereon. According to JIS K5602 (determination of reflectance of solar radiation by paint film), the measured reflectance was multiplied by a weighting value (weighting factor) and then integrated. The solar reflectance was calculated from the integrated value.

A measurement sample was formed as follows: A film according to an embodiment of the present invention was formed on a polycarbonate resin plate measuring 50 mm wide, 70 mm long, and 1 mm thick and used. That is, the coating material was applied to the polycarbonate resin plate with a spin coater to a desired thickness and baked.

An adhesive cellophane tape (CT-12M, available from Nichiban Co., Ltd.) was placed on the upper surface of the film. The sample was placed in a lightfastness tester (SUNTEST XXL+, available from ATLAS) for 200 hours at a wavelength of 300 nm to 400 nm, an irradiance of $50 \pm 2$ W/m$^2$, and a black panel temperature of 63°C $\pm$ 3°C. After the completion of the lightfastness test, the cellophane tape was peeled off from the film. The film was washed with acetone. Within 24 hours after the washing, the reflectance was measured with a spectrophotometer in the wavelength range of 300 nm to 2,500 nm. The solar reflectance was calculated according to JIS K5602.

Regarding the solar reflectance, a film having a solar reflectance of 60% or more is rated as a very good film because it is highly effective in reducing the temperature. A film having a solar reflectance of 50% or more and less than 60% is rated as a good film because it is relatively highly effective in reducing the temperature. A film having a solar reflectance of less than 50% is not rated as a good film because it is less effective in reducing the temperature.

(Rating on Scale of Three Grades: A to C)

A: A solar reflectance of 60% or more.
B: A solar reflectance of 50% or more and less than 60%.
C: A solar reflectance of less than 50%.

<Heat-Shielding Effect>

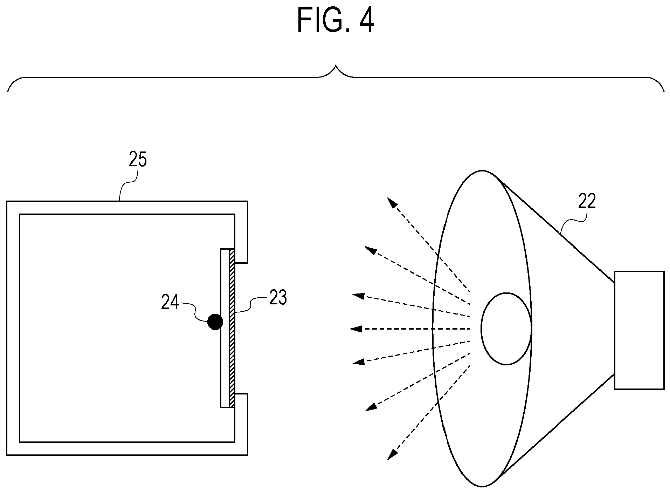

FIG. 4 is a schematic view illustrating a temperature evaluation method. As illustrated in FIG. 4, a lamp 22, a temperature measurement jig 25, and a test piece 23 for temperature evaluation were used for temperature measurement. As the test piece 23 for temperature evaluation, a film according to an embodiment of the present invention was formed on a polycarbonate resin plate measuring 50 mm wide, 70 mm long, and 1 mm thick and used. That is, a coating material was applied to the polycarbonate resin plate with a spin coater to a desired thickness and baked. As the temperature measurement jig 25, a corrugated cardboard box having a white surface and measuring 120 mm $\times$ 120 mm $\times$ 120 mm was used. A window section measuring 40 mm $\times$ 40 mm was provided at a portion where the test piece 23 for temperature evaluation was to be attached. As the lamp 22, HILUX MT150FD 6,500 K (available from Iwasaki Electric Co., Ltd.) was used.

The test piece 23 for temperature evaluation was attached to the temperature measurement jig 25. A thermocouple was attached to the back surface of the test piece 23 for temperature evaluation. The temperature measurement jig 25 to which the test piece 23 for temperature evaluation was attached was placed so as to be spaced 100 mm apart from the lamp 22. Irradiation was performed using the lamp 22 for 60 minutes. The temperature after 60 minutes was measured.

The temperature reduction effect was determined as follows: A black blank was formed on a surface of the test piece 23 for temperature evaluation. The temperature measurement was performed. The difference between the resulting temperature and the temperature measurement result of the film in each of the examples was calculated and defined as a temperature reduction effect index.

The black blank was formed as follows: 20 g of carbon black (MA100, available from Mitsubishi Chemical Corporation), 100 g of an epoxy resin (jER 828, available from Mitsubishi Chemical Corporation), 70 g of an amine curing agent (STII, available from Mitsubishi Chemical Corporation), and 20 g of a thinner were mixed using a planetary rotation device to prepare a coating material. The coating material was applied to a surface of the test piece 23 and baked.

A film with a temperature reduction effect index of 7°C or higher is rated as a film having a very high heat-shielding effect. A film with a temperature reduction effect index of 3°C or higher and lower than 7°C is rated as a film having a relatively high heat-shielding effect. A film with a temperature reduction effect index of lower than 3°C is rated as a film having a less heat-shielding effect.

(Rating on Scale of Three Grades: A to C)

A: A temperature reduction effect index of 7°C or higher.
B: A temperature reduction effect index of 3°C or higher and lower than 7°C.
C: A temperature reduction effect index of lower than 3°C.

<Evaluation of Smudge Resistance of Film>

For the evaluation of the smudge resistance of the film, gloss was measured with a gloss meter (VG 7000, available from Nippon Denshoku Industries Co., Ltd.) with a geometry of 60°. For a measurement sample, a film according to an embodiment of the present invention was formed on a polycarbonate resin plate measuring 50 mm wide, 70 mm long, and 1 mm thick and used. That is, a coating material was applied to the polycarbonate resin plate with a spin coater to a desired thickness and baked. After the baking, the gloss value of the film according to an embodiment of the present invention was measured with the gloss meter. Next, fingerprints were left on the sample with bare hands, and then the gloss value of the film of an embodiment of the present invention was measured.

$$\text{Gloss change } \Delta = \text{gloss after leaving fingerprint - gloss before leaving fingerprint}$$

A film with a gloss change $\Delta$ of less than 0.5 is rated as a film having a very small change in gloss and a good smudge resistance effect. A film with a gloss change $\Delta$ of 0.5 or more and less than 1.0 is rated as a film having a good smudge resistance effect. A film with a gloss change $\Delta$ of 1.0 or more is not rated as a good film having a good smudge resistance effect because of a large change in tint.

(Rating on Scale of Three Grades: A to C)

A: A gloss change of less than $\pm 0.5$.
B: A gloss change of $\pm 0.5$ or more and less than $\pm 2.0$.
C: A gloss change of $\pm 2.0$ or more.

<Evaluation of Film Peeling>

For a measurement sample, a film according to an embodiment of the present invention was formed on a polycarbonate resin plate measuring 50 mm wide, 70 mm long, and 1 mm thick and used. That is, a coating material was applied to the polycarbonate resin plate with a spin coater to a desired thickness and baked. After the baking, an adhesive cellophane tape (CT-12M, available from Nichiban Co., Ltd.) was placed on the upper surface of the film according to an embodiment of the present invention. The sample was placed in a lightfastness tester (SUNTEST XXL+, available from ATLAS) for 200 hours at a wavelength of 300 nm to 400 nm, an irradiance of $50 \pm 2$ W/m$^2$, and a black panel temperature of 63°C $\pm$ 3°C. After the completion of the lightfastness test, the cellophane tape was peeled off from the film. The film was washed with acetone. The film was examined for film peeling.

A: No film peeling occurs.
B: Film peeling occurs.

[Example 1]

<Preparation of Coating Material>

In Example 1, a coating material was prepared by the following method: 125 g of a resin, 0.5 g of an azo-based pigment, and 145 g of titanium oxide (content by area: 23%) were weighed. Furthermore, 40 g of resin beads (content by area: 39%), 5 g of silica, 5 g of a dispersant, and a 100 g of a solvent were weighed. These materials were mixed with a ball mill for 15 hours to give a base formulation. Then 10 g of the resulting base formulation was mixed with 1 g of a curing agent to prepare a coating material of Example 1.
As the resin, OLESTER Q-691 (available from Mitsui Chemicals, Inc.) was used. As the azo-based pigment, Chromofine Black A1103 (available from Dainichiseika Color & Chemicals Mfg. Co., Ltd.) was used. As the titanium oxide, PT-301 (available from Ishihara Sangyo Kaisha, Ltd., average particle diameter: 0.27 $\mu$m, no surface treatment) was used. As the resin beads, MZ-20 (available from Soken Chemical & Engineering Co., Ltd., average particle diameter: 20 $\mu$m) was used. As the silica, ACEMATT-OK607 was used. As the curing agent, Takenate D-120N (available from Mitsui Chemicals, Inc.) was used.

<Formation of Film>

In Example 1, a film was formed by the following method: The coating material described above was applied to a polycarbonate plate with a spin coater to a thickness of 30 μm, dried at room temperature overnight, and baked at 110°C for 30 minutes to provide a film of Example 1.

[Examples 2 to 21]

Coating materials and films of Examples 2 to 21 were produced as in Example 1, except that conditions given in Tables 1 and 2 were used.

[Examples 22 to 27]

Coating materials and films of Examples 22 to 27 were produced as in Example 1, except that the coating materials were prepared under the conditions given in Table 3.

Table 1

| | | Film | | | | | | |
|---|---|---|---|---|---|---|---|---|
| | | Titanium oxide | | | Beads | | | |
| | | Material | Particle diameter (μm) | Content by area (%) | Material | Particle diameter (μm) | Content by area (%) | Colorant | Ratio by area |
| Example 1 | no silica coating | 0.3 | 23 | acrylic resin | 20 | 39 | azo based | 0.59 |
| Example 2 | no silica coating | 0.3 | 17 | acrylic resin | 20 | 80 | azo based | 0.21 |
| Example 3 | no silica coating | 0.1 | 23 | acrylic resin | 5 | 32 | azo based | 0.72 |
| Example 4 | no silica coating | 0.3 | 23 | acrylic resin | 50 | 40 | azo based | 0.58 |
| Example 5 | no silica coating | 0.01 | 20 | glass beads | 10 | 39 | azo based | 0.51 |
| Example 6 | no silica coating | 5 | 25 | glass beads | 50 | 39 | azo based | 0.64 |
| Example 7 | no silica coating | 0.3 | 23 | glass beads | 3 | 30 | azo based | 0.77 |
| Example 8 | no silica coating | 0.3 | 23 | acrylic resin | 55 | 42 | azo based | 0.55 |
| Example 9 | no silica coating | 0.005 | 18 | glass beads | 5 | 39 | azo based | 0.46 |
| Example 10 | no silica coating | 7 | 27 | glass beads | 20 | 39 | azo based | 0.69 |
| Example 11 | no silica coating | 0.3 | 23 | acrylic resin | 20 | 39 | perylene based | 0.59 |
| Example 12 | no silica coating | 0.3 | 23 | acrylic resin | 20 | 39 | carbon black | 0.59 |

Table 2

| | | Film | | | | | | |
|---|---|---|---|---|---|---|---|---|
| | | Titanium oxide | | | Beads | | | |
| | Material | Particle diameter ($\mu$m) | Content by area (%) | Material | Particle diameter ($\mu$m) | Content by area (%) | Colorant | Ratio by area |
| Example 13 | silica coated | 0.3 | 23 | acrylic resin | 20 | 39 | azo based | 0.59 |
| Example 14 | silica coated | 0.3 | 14 | acrylic resin | 20 | 80 | azo based | 0.18 |
| Example 15 | silica coated | 0.1 | 23 | acrylic resin | 5 | 32 | azo based | 0.72 |
| Example 16 | silica coated | 0.3 | 23 | acrylic resin | 50 | 40 | azo based | 0.58 |
| Example 17 | silica coated | 0.01 | 20 | acrylic resin | 5 | 39 | azo based | 0.51 |
| Example 18 | silica coated | 0.1 | 23 | acrylic resin | 3 | 30 | azo based | 0.77 |
| Example 19 | silica coated | 0.3 | 23 | acrylic resin | 55 | 42 | azo based | 0.55 |
| Example 20 | silica coated | 0.3 | 23 | acrylic resin | 20 | 39 | perylene based | 0.59 |
| Example 21 | silica coated | 0.3 | 23 | acrylic resin | 20 | 39 | carbon black | 0.59 |

Table 3

| | Coating material | | | | | |
|---|---|---|---|---|---|---|
| | Titanium oxide | | | Beads | | |
| | Material | Particle diameter ($\mu$m) | Content by mass (%) | Material | Particle diameter ($\mu$m) | Content by mass (%) |
| Example 22 | silica coated | 0.3 | 20 | acrylic resin | 20 | 10 |
| Example 23 | silica coated | 0.3 | 55 | acrylic resin | 20 | 10 |
| Example 24 | silica coated | 0.3 | 40 | glass beads | 5 | 15 |
| Example 25 | silica coated | 0.3 | 40 | acrylic resin | 50 | 8 |
| Example 26 | silica coated | 0.01 | 40 | glass beads | 10 | 18 |
| Example 27 | silica coated | 5 | 40 | glass beads | 10 | 18 |

Tables 4 to 6 presents the evaluation results.

In the film of Example 1, the solar reflectance was 60% or more, and the temperature reduction effect index (heat-shielding effect) was 7°C or higher, which were very good. The smudge resistance (gloss change) was less than $\pm$0.5, which was significantly good.

In the film of Example 2, unlike Example 1, the coating material was used in which the amounts of the titanium oxide and the beads were adjusted in such a manner that the film had a titanium oxide content by area of 17% and a bead content by area of 80%. In the film of Example 2, the solar reflectance was 50% or more and less than 60%, which was good. The temperature reduction effect index (heat-shielding effect) was 3°C or higher and lower than 7°C, which was good. The smudge resistance (gloss change) was $\pm$0.5 or more and less than 1.0, which was good.

In Example 3, unlike Example 1, the coating material was used in which the particle diameter of the beads was changed to 5 $\mu$m and adjustments were performed in such a manner that the film had a titanium oxide content by area of 23% and a bead content by area of 32%.

In Example 7, unlike Example 1, the coating material was used in which the particle diameter of the beads was changed to 3 $\mu$m, the material of the beads was changed to glass, and adjustments were performed in such a manner that the film had a titanium oxide content by area of 23% and a bead content by area of 30%. In each of the films of Examples 3 and 7, the solar reflectance was 60% or more, and the temperature reduction effect index (heat-shielding effect) was 7°C or higher, which were very good. The smudge resistance (gloss change) was $\pm$0.5 or more and less than $\pm$1.0, which was good.

In Example 4, unlike Example 1, the coating material was used in which the particle diameter of the beads was changed to 50 $\mu$m and adjustments were performed in such a manner that the film had a titanium oxide content by area of 23% and a bead content by area of 40%.

In Example 5, unlike Example 1, the coating material was used in which the particle diameter of the titanium oxide was changed to 0.01 $\mu$m, the material of the beads was changed to glass, and adjustments were performed in such a manner that the film had a titanium oxide content by area of 20% and a bead content by area of 39%.

In Example 6, the coating material was used in which the particle diameter of the titanium oxide was changed to 5 $\mu$m, the material of the beads was changed to glass, the particle diameter of the beads was changed to 50 $\mu$m, and adjustments were performed in such a manner that the film had a titanium oxide content by area of 25% and a bead content by area of 39%.

In Example 8, unlike Example 1, the coating material was used in which the particle diameter of the beads was changed to 55 $\mu$m and adjustments were performed in such a manner that the film had a titanium oxide content by area of 23% and a bead content by area of 42%.

In Example 9, unlike Example 1, the coating material was used in which the particle diameter of the titanium oxide was changed to 0.005 $\mu$m, the material of the beads was changed to glass, the particle diameter of the beads was changed to 5 $\mu$m, and adjustments were performed in such a manner that the film had a titanium oxide content by area of 18% and a bead content by area of 39%.

In Example 12, unlike Example 1, the coating material was used in which carbon black was used as the colorant and adjustments were performed in such a manner that the film had a titanium oxide content by area of 23% and a bead content by area of 39%.

In each of the films of Examples 4, 5, 6, 8, 9, and 12, the solar reflectance was 50% or more and less than 60%, which was good. The temperature reduction effect index (heat-shielding effect) was 3°C or higher and lower than 7°C, which was good. The smudge resistance (gloss change) was less than $\pm$0.5, which was very good.

In Example 10, unlike Example 1, the coating material was used in which the particle diameter of the titanium oxide was changed to 7 $\mu$m, the material of the beads was changed to glass, and adjustments were performed in such a manner that the film had a titanium oxide content by area of 27% and a bead content by area of 39%. In the film of Example 10, the solar reflectance was 60% or more, which was very good. The temperature reduction effect index (heat-shielding effect) was 3°C or higher and lower than 7°C, which was good. The smudge resistance (gloss change) was less than $\pm$0.5, which was very good.

In Example 11, unlike Example 1, the coating material was used in which a perylene-based colorant was used and adjustments were performed in such a manner that the film had a titanium oxide content by area of 23% and a bead content by area of 39%. As with Example 1, in the film of Example 11, very good results were obtained in all evaluation items.

Examples 13 to 21 were performed as examples according to the second embodiment.

In Example 13, unlike Example 1, the coating material was used in which the titanium oxide was changed to titanium oxide having a surface coated with silica. In the film of Example 13, the solar reflectance was 60% or more, and the temperature reduction effect index (heat-shielding effect) was 7°C or higher, which were very good. The smudge resistance (gloss change) was less than $\pm$0.5, which was very good, and no film peeling occurred.

In the film of Example 14, unlike Example 13, the coating material was used in which adjustments were performed in such a manner that the film had a titanium oxide content by area of 14% and a bead content by area of 80%. In the film of Example 14, the solar reflectance was 50% or more and less than 60%, which was good. The temperature reduction effect index (heat-shielding effect) was 3°C or higher and lower than 7°C, which was good. The smudge resistance (gloss change) was $\pm$0.5 or more and less than $\pm$1.0, which was good. No film peeling occurred.

In Example 15, unlike Example 13, the coating material was used in which the particle diameter of the beads was changed to 5 $\mu$m and adjustments were performed in such a manner that the film had a titanium oxide content by area of 23% and a bead content by area of 32%.

In Example 18, unlike Example 13, the coating material was used in which the particle diameter of the beads was changed to 3 $\mu$m and adjustments were performed in such a manner that the film had a titanium oxide content by area of 23% and a bead content by area of 30%. In each of the films of Examples 15 and 18, the solar reflectance was 60% or more, and the temperature reduction effect index (heat-shielding effect) was 7°C or more, which were very good. The smudge resistance (gloss change) was $\pm$0.5 or more and less than $\pm$1.0, which was good. No film peeling occurred.

In Example 16, unlike Example 13, the coating material was used in which the particle diameter of the beads was

changed to 50 μm and adjustments were performed in such a manner that the film had a titanium oxide content by area of 23% and a bead content by area of 40%.

In Example 17, unlike Example 13, the coating material was used in which the particle diameter of the titanium oxide was changed to 0.01 μm and adjustments were performed in such a manner that the film had a titanium oxide content by area of 20% and a bead content by area of 39%.

In Example 19, unlike Example 13, the coating material was used in which the particle diameter of the beads was changed to 55 μm and adjustments were performed in such a manner that the film had a titanium oxide content by area of 23% and a bead content by area of 42%.

In Example 21, unlike Example 13, the coating material was used in which carbon black was used as the colorant and adjustments were performed in such a manner that the film had a titanium oxide content by area of 23% and a bead content by area of 39%.

In each of the films of Examples 16, 17, 19, and 21, the solar reflectance was 50% or more and less than 60%, which was good. The temperature reduction effect index (heat-shielding effect) was 3°C or more and less than 7°C, which was good. The smudge resistance (gloss change) was less than ±0.5, which was very good. No film peeling occurred.

In Example 20, unlike Example 13, the coating material was used in which a perylene-based colorant was used and adjustments were performed in such a manner that the film had a titanium oxide content by area of 23% and a bead content by area of 39%. As with Example 13, in Example 20, very good results were obtained in all evaluation items.

In Example 22, unlike Example 13, the coating material was used in which the coating material was adjusted so as to have a titanium oxide content by mass of 20% and a bead content by mass of 10% with respect to nonvolatile components in the coating material.

In Example 25, unlike Example 22, the coating material was used in which the particle diameter of the beads was changed to 50 μm and the coating material was adjusted so as to have a titanium oxide content by mass of 40% and a bead content by mass of 8% with respect to nonvolatile components in the coating material.

In Example 26, unlike Example 22, the coating material was used in which the particle diameter of the titanium oxide was changed to 0.01 μm, the beads was changed to glass beads, and the coating material was adjusted so as to have a titanium oxide content by mass of 40% and a bead content by mass of 18% with respect to nonvolatile components in the coating material.

In Example 27, unlike Example 26, the coating material was used in which the particle diameter of the titanium oxide was changed to 5 μm. In each of the films formed by the use of the coating materials of Examples 22, 25, 26, and 27, the solar reflectance was 50% or more and less than 60%, which was good. The temperature reduction effect index (heat-shielding effect) was 3°C or higher and lower than 7°C, which was good. The smudge resistance (gloss change) was less than ±0.5, which was very good.

In Example 23, unlike Example 22, the coating material was used in which the coating material was adjusted so as to have a titanium oxide content by mass of 55% and a bead content by mass of 10% with respect to nonvolatile components in the coating material. As with Example 1, in the film formed by the use of the coating material of Example 23, very good results were obtained in all evaluation items.

In Example 24, unlike Example 26, the coating material was used in which the particle diameter of the titanium oxide was changed to 0.3 μm, the particle diameter of the beads was changed to 5 μm, and the coating material was adjusted so as to have a titanium oxide content by mass of 40% and a bead content by mass of 15% with respect to nonvolatile components in the coating material. In the film of Example 24 formed by the use of the coating material of Example 24, the solar reflectance was 60% or more, the temperature reduction effect index (heat-shielding effect) was 7°C or more, which was very good. The smudge resistance (gloss change) was ±0.5 or more and less than ±1.0, which was good.

Table 4

|  | Solar reflectance | Heat-shielding effect | Smudge resistance effect |
|---|---|---|---|
| Example 1 | A | A | A |
| Example 2 | B | B | B |
| Example 3 | A | A | B |
| Example 4 | B | B | A |
| Example 5 | B | B | A |
| Example 6 | B | B | A |
| Example 7 | A | A | B |
| Example 8 | B | B | A |

(continued)

|  | Solar reflectance | Heat-shielding effect | Smudge resistance effect |
|---|---|---|---|
| Example 9 | B | B | A |
| Example 10 | A | B | A |
| Example 11 | A | A | A |
| Example 12 | B | B | A |

Table 5

|  | Solar reflectance | Heat-shielding effect | Smudge resistance effect | Film peeling effect |
|---|---|---|---|---|
| Example 13 | A | A | A | A |
| Example 14 | B | B | B | A |
| Example 15 | A | A | B | A |
| Example 16 | B | B | A | A |
| Example 17 | B | B | A | A |
| Example 18 | A | A | B | A |
| Example 19 | B | B | A | A |
| Example 20 | A | A | A | A |
| Example 21 | B | B | A | A |

Table 6

|  | Solar reflectance | Heat-shielding effect | Smudge resistance effect | Film peeling effect |
|---|---|---|---|---|
| Example 22 | B | B | A | A |
| Example 23 | A | A | A | A |
| Example 24 | A | A | B | A |
| Example 25 | B | B | A | A |
| Example 26 | B | B | A | A |
| Example 27 | B | B | A | A |

[Comparative Example 1 to 19]

For comparison, the preparation of coating materials, the production of films, and the evaluation of the films were performed as in Examples 1 to 19. Tables 7 to 9 present the conditions, the addition amounts, and the content of constituent materials.

Table 7

|  | Film | | | | | | | |
|---|---|---|---|---|---|---|---|---|
|  | Titanium oxide | | | Beads | | | Colorant | Ratio by area |
|  | Material | Particle diameter (μm) | Content by area (%) | Material | Particle diameter (μm) | Content by area (%) | | |
| Comparative example 1 | no silica coating | 0.3 | 8 | acrylic resin | 5 | 62 | azo based | 0.13 |
| Comparative example 2 | no silica coating | 0.3 | 10 | acrylic resin | 50 | 85 | azo based | 0.12 |

(continued)

| | Film | | | | | | | |
| | Titanium oxide | | | Beads | | | Colorant | Ratio by area |
| | Material | Particle diameter (μm) | Content by area (%) | Material | Particle diameter (μm) | Content by area (%) | | |
| Comparative example 3 | no silica coating | 0.01 | 9 | acrylic resin | 10 | 57 | azo based | 0.16 |
| Comparative example 4 | no silica coating | 5 | 10 | acrylic resin | 20 | 53 | azo based | 0.19 |
| Comparative example 5 | no silica coating | 0.3 | 8 | acrylic resin | 3 | 62 | azo based | 0.13 |
| Comparative example 6 | no silica coating | 0.3 | 8 | acrylic resin | 55 | 42 | azo based | 0.19 |
| Comparative example 7 | no silica coating | 0.005 | 10 | glass beads | 10 | 70 | azo based | 0.14 |
| Comparative example 8 | no silica coating | 7 | 10 | acrylic resin | 20 | 55 | azo based | 0.18 |

Table 8

| | Film | | | | | | | |
| | Titanium oxide | | | Beads | | | Colorant | Ratio by area |
| | Material | Particle diameter (μm) | Content by area (%) | Material | Particle diameter (μm) | Content by area (%) | | |
| Comparative example 9 | silica coated | 0.3 | 8 | acrylic resin | 5 | 62 | azo based | 0.13 |
| Comparative example 10 | silica coated | 0.3 | 13 | acrylic resin | 50 | 85 | azo based | 0.15 |
| Comparative example 11 | silica coated | 0.01 | 8 | acrylic resin | 10 | 57 | azo based | 0.14 |
| Comparative example 12 | silica coated | 5 | 8 | acrylic resin | 20 | 53 | azo based | 0.15 |
| Comparative example 13 | silica coated | 0.3 | 8 | acrylic resin | 3 | 62 | azo based | 0.13 |
| Comparative example 14 | silica coated | 0.3 | 8 | acrylic resin | 55 | 55 | azo based | 0.15 |
| Comparative example 15 | silica coated | 7 | 10 | acrylic resin | 20 | 70 | azo based | 0.14 |

Table 9

| | Coating material | | | | | |
| | Titanium oxide | | | Beads | | |
| | Material | Particle diameter (μm) | Content by mass (%) | Material | Particle diameter (μm) | Content by mass (%) |
| Comparative example 16 | silica coated | 0.3 | 18 | acrylic resin | 20 | 10 |

(continued)

| | Coating material | | | | | |
| | Titanium oxide | | | Beads | | |
| | Material | Particle diameter (μm) | Content by mass (%) | Material | Particle diameter (μm) | Content by mass (%) |
|---|---|---|---|---|---|---|
| Comparative example 17 | silica coated | 0.3 | 58 | acrylic resin | 20 | 10 |
| Comparative example 18 | silica coated | 0.3 | 35 | acrylic resin | 20 | 0.3 |
| Comparative example 19 | silica coated | 0.01 | 35 | acrylic resin | 20 | 22 |

Tables 10 to 12 present the evaluation results in comparative examples.

In Comparative example 1, unlike Example 1, the coating material was used in which the particle diameter of the beads was changed to 5 μm and the amounts of the titanium oxide and the beads were adjusted in such a manner that the film had a titanium oxide content by area of 8% and a bead content by mass of 62%.

In Comparative example 5, unlike Example 1, the coating material was used in which the particle diameter of the beads was changed to 3 μm and adjustments were performed in such a manner that the film had a titanium oxide content by area of 8% and a bead content by area of 62%.

In each of the films of Comparative examples 1 and 5, the solar reflectance was less than 50%, and the temperature reduction effect index (heat-shielding effect) was lower than 3°C, which were poor. The smudge resistance (gloss change) was ±2.0 or more, which was poor.

In Comparative example 2, unlike Example 1, the coating material was used in which the particle diameter of the beads was changed to 50 μm and adjustments were performed in such a manner that the film had a titanium oxide content by area of 10% and a bead content by area of 85%.

In Comparative example 3, unlike Example 1, the coating material was used in which the particle diameter of the titanium oxide was changed to 0.01 μm and adjustments were performed in such a manner that the film had a titanium oxide content by area of 9% and a bead content by area of 57%.

In Comparative example 4, unlike Example 1, the coating material was used in which the particle diameter of the titanium oxide was changed to 5 μm and adjustments were performed in such a manner that the film had a titanium oxide content by area of 10% and a bead content by area of 53%.

In Comparative example 6, unlike Example 1, the coating material was used in which the particle diameter of the beads was changed to 55 μm and adjustments were performed in such a manner that the film had a titanium oxide content by area of 8% and a bead content by area of 42%.

In Comparative example 7, the coating material was used in which the particle diameter of the titanium oxide was changed to 0.005 μm, the material of the beads was changed to glass, and adjustments were performed in such a manner that the film had a titanium oxide content by area of 10% and a bead content by area of 70%.

In Comparative example 8, unlike Example 1, the coating material was used in which the particle diameter of the titanium oxide was changed to 7 μm and adjustments were performed in such a manner that the film had a titanium oxide content by area of 10% and a bead content by area of 55%.

In each of the films of Comparative examples 2, 3, 4, 6, 7, and 8, the solar reflectance was less than 50%, and the temperature reduction effect index (heat-shielding effect) was lower than 3°C, which were poor. The smudge resistance (gloss change) was less than ±0.5, which was very good.

Comparative examples 9 to 15 were performed as examples according to the second embodiment.

In Comparative example 9, unlike Example 14, the coating material was used in which the particle diameter of the beads was changed to 5 μm and adjustments were performed in such a manner that the film had a titanium oxide content by area of 8% and a bead content by area of 62%. In the film of Comparative example 9, no film peeling occurred in the portion where the tape was placed. The solar reflectance was less than 50%, and the temperature reduction effect index (heat-shielding effect) was less than 3°C, which were poor. The smudge resistance (gloss change) was ±2.0 or more, which was poor.

In Comparative example 10, unlike Example 14, the coating material was used in which the particle diameter of the beads was changed to 50 μm and adjustments were performed in such a manner that the film had a titanium oxide content by area of 13% and a bead content by area of 85%. In the film of Comparative example 10, no film peeling occurred in the portion where the tape was placed. The solar reflectance was less than 50%, and the temperature reduction effect index (heat-shielding effect) was less than 3°C, which were poor. The smudge resistance (gloss change) was less than ±0.5, which was very good.

In Comparative example 11, unlike Example 14, the coating material was used in which the particle diameter of the titanium oxide was changed to 0.01 µm, the particle diameter of the beads was changed to 10 µm, and adjustments were performed in such a manner that the film had a titanium oxide content by area of 8% and a bead content by area of 57%.

In Comparative example 12, unlike Example 14, the coating material was used in which the particle diameter of the titanium oxide was changed to 5 µm and adjustments were performed in such a manner that the film had a titanium oxide content by area of 8% and a bead content by area of 53%.

In Comparative example 14, unlike Example 14, the coating material was used in which the particle diameter of the beads was changed to 55 µm and adjustments were performed in such a manner that the film had a titanium oxide content by area of 8% and a bead content by area of 55%.

In Comparative example 15, unlike Example 14, the coating material was used in which the particle diameter of the titanium oxide was changed to 7 µm and adjustments were performed in such a manner that the film had a titanium oxide content by area of 10% and a bead content by area of 70%.

In each of the films of Comparative examples 11, 12, 14, and 15, the solar reflectance was less than 50%, and the temperature reduction effect index (heat-shielding effect) was less than 3°C, which were poor. The smudge resistance (gloss change) was less than ±0.5, which was very good. However, film peeling occurred in the portion where the tape was placed.

In Comparative example 13, unlike Example 14, the coating material was used in which the particle diameter of the beads was changed to 3 µm and adjustments were performed in such a manner that the film had a titanium oxide content by area of 8% and a bead content by area of 62%.

In the film of Comparative example 13, the solar reflectance was less than 50%, and the temperature reduction effect index (heat-shielding effect) was less than 3°C, which were poor. The smudge resistance (gloss change) was ±2.0 or more, which was poor. Furthermore, film peeling occurred in the portion where the tape was placed.

In Comparative example 16, unlike Example 22, the coating material was used in which the coating material was adjusted so as to have a titanium oxide content by mass of 18% with respect to nonvolatile components in the coating material. In the film formed from the coating material of Comparative example 16, the solar reflectance was less than 50%, and the temperature reduction effect index (heat-shielding effect) was less than 3°C, which were poor. The smudge resistance (gloss change) was less than ±0.5, which was very good.

In Comparative example 17, unlike Example 22, the coating material was used in which the coating material was adjusted so as to have a titanium oxide content by mass of 58% with respect to nonvolatile components in the coating material.

In Comparative example 19, unlike Example 22, the coating material was used in which the particle diameter of the titanium oxide was changed to 0.01 µm and the coating material was adjusted so as to have a titanium oxide content by mass of 35% and a bead content by mass of 22% with respect to nonvolatile components in the coating material. In each of the films formed from the coating materials of Comparative examples 17 and 19, the solar reflectance was 60% or more, and the temperature reduction effect index (heat-shielding effect) was 7°C or higher, which were very good. The smudge resistance (gloss change) was less than ±0.5, which was very good. However, film peeling occurred in the portion where the tape was placed.

In Comparative example 18, unlike Example 22, the coating material was used in which the coating material was adjusted so as to have a titanium oxide content by mass of 35% and a bead content by mass of 0.3% with respect to nonvolatile components in the coating material. In the film formed from the coating material of Comparative example 18, no film peeling occurred in the portion where the tape was placed. The solar reflectance was 60% or more, and the temperature reduction effect index (heat-shielding effect) was 7°C or higher, which were very good. The smudge resistance (gloss change) was 1.0 or more, which was poor.

Table 10

| | Solar reflectance | Heat-shielding effect | Smudge resistance effect |
|---|---|---|---|
| Comparative example 1 | C | C | C |
| Comparative example 2 | C | C | A |
| Comparative example 3 | C | C | A |
| Comparative example 4 | C | C | A |
| Comparative example 5 | C | C | C |
| Comparative example 6 | C | C | A |
| Comparative example 7 | C | C | A |
| Comparative example 8 | C | C | A |

EP 3 747 958 B1

Table 11

|  | Solar reflectance | Heat-shielding effect | Smudge resistance effect | Film peeling effect |
|---|---|---|---|---|
| Comparative example 9 | C | C | C | A |
| Comparative example 10 | C | C | A | A |
| Comparative example 11 | C | C | A | B |
| Comparative example 12 | C | C | A | B |
| Comparative example 13 | C | C | C | B |
| Comparative example 14 | C | C | A | B |
| Comparative example 15 | C | C | A | B |

Table 12

|  | Solar reflectance | Heat-shielding effect | Smudge resistance effect | Film peeling effect |
|---|---|---|---|---|
| Comparative example 16 | C | C | A | A |
| Comparative example 17 | A | A | A | B |
| Comparative example 18 | A | A | C | A |
| Comparative example 19 | A | A | A | B |

A film disposed on a surface of an optical apparatus using the present invention can be used for a lens barrel for an optical apparatus, such as a camera, a video, or broadcast equipment, or for a camera body, a video body, a surveillance camera, a weather camera, or the like, which can be used outdoors.

While the present invention has been described with reference to exemplary embodiments, it is to be understood that the invention is not limited to the disclosed exemplary embodiments, but to the following claims.

## Claims

1.  An article, comprising:

    a base material (1) and a film being disposed on the base material (1),
    wherein the film is at least containing:

    a resin (2),
    beads (3, 7) having a number-average particle diameter of more than 5 $\mu$m and 50 $\mu$m or less measurable as described in the description, and
    titanium oxide (4, 6) having a number-average particle diameter of 10 nm or more and 5 $\mu$m or less measurable as described in the description,

    wherein the amount of the titanium oxide (4) (% by area) contained in the film is 1/5 or more of the amount of the beads (3) (% by area) contained in the film, measurable as described in the description, or
    the beads (7) are composed of a resin, the titanium oxide (6) is having a surface coated with silica (9), and the amount of the titanium oxide (6) (% by area) contained in the film is 1/6 or more of the amount of the beads (7) (% by area) contained in the film, measurable as described in the description.

2.  The article according to Claim 1, wherein the titanium oxide (4) (% by area) contained in the film is 10% by area or more and 80% by area or less, measurable as described in the description.

3.  The article according to Claims 1 or 2, wherein the film further contains silica particles.

4.  The article according to any one of Claims 1 to 3, wherein the base material includes a primer.

25

**5.** The article according to any one of claims 1 to 4 being an optical apparatus.

**6.** A coating material, at least comprising:

a resin (2);
beads (3, 7) having a number-average particle diameter of more than 5 $\mu$m and 50 $\mu$m or less, measurable as described in the description; and
titanium oxide (4, 6) having a number-average particle diameter of 10 nm or more and 5 $\mu$m or less, measurable as described in the description,
the amount of the titanium oxide (4, 6) being 20% by mass or more and 55% by mass or less with respect to all nonvolatile components in the coating material and the amount of the beads (3, 7) being 0.5% by mass or more and 20% by mass or less with respect to all nonvolatile components in the coating material.

**7.** The coating material according to claim 6, wherein

the beads (7) are composed of a resin; and
the titanium oxide (6) is having a surface coated with silica (9).

**8.** The coating material according to Claims 6 or 7, further comprising:
silica particles.

**Patentansprüche**

**1.** Artikel, umfassend:

ein Basismaterial (1) und einen auf dem Basismaterial (1) angeordneten Film,
wobei der Film mindestens enthält:

ein Harz (2),
Kügelchen (3, 7) mit einem zahlengemittelten Teilchendurchmesser von mehr als 5 $\mu$m und 50 $\mu$m oder weniger, messbar wie in der Beschreibung beschrieben, und
Titanoxid (4, 6) mit einem zahlengemittelten Teilchendurchmesser von 10 nm oder mehr und 5 $\mu$m oder weniger, messbar wie in der Beschreibung beschrieben,

wobei die Menge des in dem Film enthaltenen Titanoxids (4) (Flächen-%) 1/5 oder mehr der Menge der in dem Film enthaltenen Kügelchen (3) (Flächen-%) beträgt, messbar wie in der Beschreibung beschrieben, oder die Kügelchen (7) aus einem Harz bestehen, das Titanoxid (6) eine mit Siliciumdioxid (9) beschichtete Oberfläche aufweist und die Menge des in dem Film enthaltenen Titanoxids (6) (Flächen-%) 1/6 oder mehr der Menge der in dem Film enthaltenen Kügelchen (7) (Flächen-%) beträgt, messbar wie in der Beschreibung beschrieben.

**2.** Artikel nach Anspruch 1, wobei das in dem Film enthaltene Titanoxid (4) (Flächen-%) 10 Flächen-% oder mehr und 80 Flächen-% oder weniger beträgt, messbar wie in der Beschreibung beschrieben.

**3.** Artikel nach Anspruch 1 oder 2, wobei der Film ferner Siliciumdioxidteilchen enthält.

**4.** Artikel nach einem der Ansprüche 1 bis 3, wobei das Basismaterial einen Primer enthält.

**5.** Artikel nach einem der Ansprüche 1 bis 4, der eine optische Vorrichtung ist.

**6.** Beschichtungsmaterial, mindestens umfassend:

ein Harz (2);
Kügelchen (3, 7) mit einem zahlengemittelten Teilchendurchmesser von mehr als 5 $\mu$m und 50 $\mu$m oder weniger, messbar wie in der Beschreibung beschrieben; und
Titanoxid (4, 6) mit einem zahlengemittelten Teilchendurchmesser von 10 nm oder mehr und 5 $\mu$m oder weniger, messbar wie in der Beschreibung beschrieben,
wobei die Menge des Titanoxids (4, 6) 20 Massen-% oder mehr und 55 Massen-% oder weniger in Bezug auf alle nichtflüchtigen Komponenten in dem Beschichtungsmaterial beträgt und die Menge der Kügelchen (3, 7) 0,5 Massen-% oder mehr und 20 Massen-% oder weniger in Bezug auf alle nichtflüchtigen Komponenten in dem Beschichtungsmaterial beträgt.

**7.** Beschichtungsmaterial nach Anspruch 6, wobei

die Kügelchen (7) aus einem Harz bestehen; und
das Titanoxid (6) eine mit Siliciumdioxid (9) beschichtete Oberfläche aufweist.

**8.** Beschichtungsmaterial nach Anspruch 6 oder 7, ferner umfassend:
Siliciumdioxidteilchen.

**Revendications**

**1.** Article comprenant :

un matériau de base (1) et un film qui est disposé sur le matériau de base (1),
dans lequel le film contient au moins :

une résine (2),
des billes (3, 7) ayant un diamètre de particule moyen en nombre de plus de 5 $\mu$m et de 50 $\mu$m ou moins mesurable comme décrit dans la description, et
de l'oxyde de titane (4, 6) ayant un diamètre de particule moyen en nombre de 10 nm ou plus et de 5 $\mu$m ou moins mesurable comme décrit dans la description,
dans lequel la quantité de l'oxyde de titane (4) (% en superficie) contenu dans le film représente 1/5 ou plus de la quantité des billes (3) (% en superficie) contenues dans le film, mesurable comme décrit dans la description, ou
les billes (7) sont composées **d'une** résine, l'oxyde de titane (6) présente une surface revêtue de silice (9), et la quantité de l'oxyde de titane (6) (% en superficie) contenu dans le film représente 1/6 ou plus de la quantité des billes (7) (% en superficie) contenues dans le film, mesurable comme décrit dans la description.

**2.** Article selon la revendication 1, dans lequel l'oxyde de titane (4) (% en superficie) contenu dans le film est de 10 % en superficie ou plus et de 80 % en superficie ou moins, mesurable comme décrit dans la description.

**3.** Article selon les revendications 1 ou 2, dans lequel le film contient en outre des particules de silice.

**4.** Article selon l'une quelconque des revendications 1 à **3,** dans lequel le matériau de base inclut un apprêt.

**5.** Article selon l'une quelconque des revendications 1 à 4 qui est un appareil optique.

**6.** Matériau de revêtement, comprenant au moins :

une résine (2) ;
des billes (3, 7) ayant un diamètre de particule moyen en nombre de plus de 5 $\mu$m et de 50 $\mu$m ou moins, mesurable comme décrit dans la description ; et
de l'oxyde de titane (4, 6) ayant un diamètre de particule moyen en nombre de 10 nm ou plus et de 5 $\mu$m ou moins, mesurable comme décrit dans la description,
la quantité de l'oxyde de titane (4, 6) étant de 20 % en masse ou plus et de 55 % en masse ou moins par rapport à tous les composants non volatils dans le matériau de revêtement et la quantité des billes (3, 7) étant de 0,5 % en masse ou plus et de 20 % en masse ou moins par rapport à tous les composants non volatils dans le matériau de revêtement.

**7.** Matériau de revêtement selon la revendication **6,** dans lequel

les billes (7) sont composées d'une résine ; et
l'oxyde de titane (6) présente une surface revêtue de silice (9).

**8.** Matériau de revêtement selon les revendications 6 ou **7,** comprenant en outre :
des particules de silice.

# FIG. 1

FIG. 2A

FIG. 2B

FIG. 2C

# FIG. 3A

# FIG. 3B

# FIG. 4

**EP 3 747 958 B1**

**Patent documents cited in the description**

- JP H09302272 A
- US 2015361270 A1
- EP 3388489 A1
- US 2017299840 A1